# FASCICULE DE BREVET EUROPEEN

(11) **EP 3 772 705 B1**
(45) Date de publication et mention de la délivrance du brevet: **03.06.2026**
(21) Numéro de dépôt: 20189133.0
(22) Date de dépôt: 03.08.2020
(51) Int. Cl.: G06F 18/40, G06V 10/98

(54) **SYSTÈME ET MÉTHODE DE CONTRÔLE QUALITÉ DE PIÈCES FABRIQUÉES**
SYSTEM UND METHODE ZUR QUALITÄTSKONTROLLE VON GEFERTIGTEN TEILEN
SYSTEM AND METHOD FOR QUALITY CONTROL OF MANUFACTURED PARTS

(30) Priorité: 07.08.2019 BE 201905510
(43) Date de publication de la demande: 10.02.2021
(73) Titulaire: Safran Aero Boosters, 4041 Herstal (BE)
(72) Inventeur: RAIMARCKERS, Nicolas Oscar Louis Ghislain, 77550 MOISSY-CRAMAYEL (FR)
(74) Mandataire: Gevers Patents

(56) Documents cités:
- SASSI PAOLO ET AL: "A Smart Monitoring System for Automatic Welding Defect Detection", IEEE TRANSACTIONS ON INDUSTRIAL ELECTRONICS, IEEE SERVICE CENTER, PISCATAWAY, NJ, USA, vol. 66, no. 12, 7 February 2019 (2019-02-07), pages 9641 - 9650, XP011737912, ISSN: 0278-0046, [retrieved on 20190801], DOI: 10.1109/TIE.2019.2896165
- WANG YUTING ET AL: "A Welding Defect Identification Approach in X-ray Images Based on Deep Convolutional Neural Networks", 24 July 2019, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 53 - 64, ISBN: 978-3-319-10403-4, XP047515453
- BRYAN C RUSSELL ET AL: "LabelMe: A Database and Web-Based Tool for Image Annotation", INTERNATIONAL JOURNAL OF COMPUTER VISION, KLUWER ACADEMIC PUBLISHERS, BO, vol. 77, no. 1-3, 31 October 2007 (2007-10-31), pages 157 - 173, XP019581885, ISSN: 1573-1405

## Description

### Domaine technique

La présente invention concerne un système et une méthode de contrôle qualité de pièces fabriquées.

### Art antérieur

Lors de la production de pièces industrielles, par exemple, dans le domaine aéronautique, des contrôles qualité sont normalement effectués pour s'assurer que les pièces satisfassent à certains critères tels que l'intégrité, la fiabilité, l'absence de défauts majeurs, ...

Dans certains cas, ces contrôles qualité sont essentiellement effectués en deux étapes :
(1) acquérir des images de la pièce à contrôler;
(2) vérifier la qualité de la pièce à partir de ces images.

Ces étapes sont généralement implémentées à partir d'un système de contrôle qualité comprenant :
- un dispositif d'acquisition d'images (par exemple par rayons X, par scans tridimensionnels, ou par la tomographie) ;
- une base de données pour stocker les images ;
- un module d'inspection permettant une visualisation des images.

Dans un objectif de gain de temps, il est connu, par exemple des documents
- SASSI PAOLO et al, "A smart Monitoring System for Automatic Welding Defect Detection", IEEE transactions on industrial electronics, IEEE service center, Piscataway, NJ, USA, vol. 66, no. 12; décembre 2019, pages 9641-9650, XP01173912 ;
- BRYAN C RUSSELL et al : "LabelMe : A database and Web-Based Toll for Image Annotation", Internal Journal of Computer Vision, Kluwers Academic Publishers, BO, vol. 77, no. 1-3, 31 octobre 2007 (2007-10-31), pages 157-173, XP019581885 ;
de chercher à automatiser ces contrôles qualités par des algorithmes.

Il existe cependant des contextes critiques dans lesquels l'intervention d'un opérateur lors de l'étape (2) est, à ce jour, indispensable pour des pièces industrielles susceptibles de donner des images complexes à interpréter. C'est, par exemple, le cas pour un contrôle qualité d'une soudure d'aube d'une turbomachine d'aéronef. D'une part, une erreur dans ce type de contrôle qualité est prohibée compte tenu des graves répercussions qu'elle peut avoir. D'autre part, comme deux aubes ne sont jamais soudées identiquement, **il** est exclus d'utiliser un algorithme pour détecter de façon automatique des défauts de soudure sur base de motifs ou de modèles.

Dans les contextes susdits, comme il n'est pas possible d'automatiser de façon complète les processus de contrôles qualités par des algorithmes, il est légitime de se tourner vers des techniques de d'automatisation algorithmique partielle pour assister le travail d'un opérateur à l'étape (2).

Néanmoins, l'intégration pratique de ces techniques dans le système de contrôle qualité existant est rendue particulièrement complexe et couteuse. En effet, cette intégration nécessite de revoir en profondeur, parfois complètement, les procédures, les hardwares et/ou les softwares associés au système de contrôle qualité de l'installation existante, ainsi que les formations des opérateurs. En outre, dans le domaine aéronautique, de telles révisions s'accompagnent de l'obtention de nouvelles certifications étant potentiellement difficiles à obtenir.

### Résumé de l'invention

Un objet de l'invention est de fournir un système de contrôle qualité qui intègre simplement et de façon peu couteuse un système d'assistance semi-automatique permettant une détection de défauts de soudure d'aubes d'une turbomachine à la fois rapide, fiable et efficace.

À cet effet, l'invention propose un système de contrôle qualité de pièces fabriquées tel que défini par la revendication 1.

Le système de contrôle qualité selon la présente invention comprend une installation supposée existante, à savoir le dispositif d'acquisition, la base de donnée et l'unité d'inspection, à laquelle sont avantageusement intégrés des modules d'annotation, d'apprentissage et de sanction, de façon à permettre une détection de défauts, par exemple des défauts de soudures de pièces fabriquées, par exemple d'aubes d'une turbomachine, qui est à la fois rapide, fiable et efficace.

Chacun des modules (informatiques) est intégrable de façon indépendante ce qui permet une intégration globale simple, aisément portable, transférable et peu couteuse de techniques de d'automatisation partielle implémentées par les modules de sanction et d'apprentissage à l'installation potentiellement existante pour assister le travail d'un opérateur lors du contrôle qualité. Grâce à l'invention, cette intégration est en outre réalisée avec un minimum de changements dans l'organisation du contrôle qualité car l'unité d'inspection reste potentiellement inchangée. Les protocoles utilisés lors des interactions avec l'opérateur sont aussi au moins en partie inchangés, ce qui limite tout besoin de formation de celui-ci. L'obtention des éventuelles qui seraient nécessaires dans le domaine aéronautique sont également plus faciles à obtenir.

Les fichiers informatiques sont préférentiellement des fichiers d'un format diconde ce qui permet d'assurer à la fois un enregistrement du contenu des fichiers informatiques sur la base de données qui soit conforme aux normes internationale, ainsi que la traçabilité et la compatibilité de manipulations des métadonnées. Les images et les premières métadonnées sont de préférence incorruptibles et/ou ne peuvent être que lus par les modules susdits, ou de façon plus générale par des ordinateurs, alors que les deuxièmes, troisièmes et quatrièmes métadonnées sont de préférence que lisibles et éditables, une traçabilité de leurs modifications étant de préférence enregistrées dans la base de données durant le processus d'utilisation du système de contrôle qualité. L'ordre d'écriture les deuxièmes, troisièmes et quatrièmes métadonnées varie potentiellement selon l'avancement du processus d'utilisation du système.

Le système selon l'invention est particulièrement adapté pour les contrôles qualité de pièces fabriquées d'une turbomachine d'aéronef, en particulier, des pièces fabriquées comprenant (ou éventuellement consistant en) des aubes soudées. Optionnellement, chacune des pièces fabriquées comprend au moins une aube et une virole d'une turbomachine d'aéronef, qui sont soudées entre elles. Le système selon l'invention est très adapté pour les contrôles qualité de ces pièces fabriquées, et en particulier pour détecter une présence ou une absence de défaut de soudure d'une des aubes. Toutefois, d'autres types de défauts d'une pièce fabriquée (en particulier d'une aube d'une turbomachine d'aéronef) peuvent être détectés parmi lesquels : un manque de matière ou de liaison, une soufflure, une porosité, une fissure et/ou une inclusion dense. Les défauts de soudure susmentionnés font toutefois particulièrement l'objet de la détection car ils peuvent être très complexes à détecter et à interpréter sur des images pour un opérateur. En effet, les images comprennent typiquement des variations dues à la géométrie, des ombres, des variabilités géométriques et/ou métallurgiques, ce qui rend la détection d'un défaut de soudure sur une image difficile, d'autant plus que celui-ci n'est généralement visible que sur très peu de pixels (environ neuf) des images. L'usage d'un système de contrôle qualité qui intègre de façon aisée un système d'assistance semi-automatique comprenant les modules d'annotation, d'apprentissage et de sanction selon l'invention est donc particulièrement avantageux pour assister l'opérateur dans sa tâche.

Les images à analyser pour des détections de défaut de soudure d'aubes soudées d'une turbomachine d'aéronef sont préférentiellement des images par rayons X. En effet, ce type d'images est tout particulièrement adapté à la nature des défauts recherchés. De façon plus générale, le dispositif d'acquisition selon l'invention comprend préférentiellement un appareil d'imagerie par rayons X, de sorte que les images sont des images par rayons X.

Le module d'inspection et/ou le module d'annotation et/ou le module de sanction comprend préférentiellement des moyens informatiques, par exemple un processeur, pour lire les fichiers informatiques et/ou écrire dans les fichiers informatiques (en leur fournissant des deuxièmes, troisièmes et/ou quatrièmes métadonnées, par exemple). Le module de sanction comprend de préférence des moyens informatiques, par exemple un processeur, adaptés pour exécuter l'algorithme. L'algorithme comprend de préférence des instructions qui, lorsqu'il est exécuté par mes moyens informatiques, conduisent ceux-ci à mettre en œuvre une méthode de détection des défauts des pièces fabriquées sur base des images et des premières métadonnées des fichiers informatiques. Le module d'apprentissage comprend préférentiellement des moyens informatiques, un processeur et/ou un ordinateur par exemple, pour développer et/ou entraîner l'algorithme.

L'unité d'inspection comprend préférentiellement un ordinateur. L'interface comprend préférentiellement un écran et/ou un clavier et/ou une souris d'un l'ordinateur, de préférence, d'un ordinateur faisant partie de l'unité d'inspection. Une image visualisée par l'intermédiaire de l'interface est de préférence l'image d'un fichier informatique lu par le module d'inspection.

Plusieurs modes de réalisation préférés de l'invention selon introduits ci-dessous. Leurs intérêts et leurs applications seront particulièrement éclairés au regard de la méthode de contrôle qualité ci-après introduite.

Les fichiers informatiques lus par les modules d'inspection, d'annotation, d'apprentissage et de sanction comprennent de préférence toujours les images et les premières métadonnées car celles-ci sont générées suite à l'acquisition des images par le dispositif d'acquisition. En outre, selon un mode de réalisation de l'invention, correspondant préférentiellement à des étapes de la méthode de contrôle qualité ci-après introduite, les fichiers informatiques lus par le module d'inspection comprennent de préférence aussi les quatrièmes métadonnées. Dans ce cas, les fichiers informatiques lus par le module d'inspection et dont les images sont éventuellement visualisées par l'interface de l'unité d'inspection, comprennent déjà des quatrièmes métadonnées de détection qui peuvent être lues par le module d'inspection et qui peuvent guider et/ou l'opérateur dans une détection de défaut sur les images de ces fichiers informatiques. Ceci est bien sûr l'objectif poursuivi par une assistance semi-automatique dans le contrôle qualité. De façon plus préférée, dans ce cas, les quatrièmes métadonnées des fichiers informatiques comprennent une métadonnée qui, lorsqu'elle est lue par le module d'instruction instruit :
- soit une visualisation de l'image du fichier informatique via l'interface,
- soit une non visualisation de celle-ci.
Préférentiellement, cette métadonnée représente une indication du module de sanction d'une absence ou non de défaut avec une probabilité très élevée, de préférence au moins 99,99%, de sorte que l'image du fichier informatique dont les quatrièmes métadonnées correspondantes comprennent une métadonnée indiquant une telle absence de défaut n'est plus visualisée via l'interface par l'opérateur, épargnant ainsi un temps précieux d'inspection pour l'opérateur.

Préférentiellement, durant tout le processus d'utilisation du système et de façon générale, les fichiers informatiques lus par le module le module de sanction ne comprennent que les images et les premières métadonnées. En particulier, tel qu'il est explicité ci-dessus, le module de sanction consiste préférentiellement en l'outil central dans la mise en œuvre d'une assistance semi-automatique et algorithmique pour le contrôle qualité. Il est préférentiellement capable de façon semi-autonome de détecter une présence ou une absence de défaut des pièces fabriquées sur base des images et des premières métadonnées de lecture des images. Avantageusement, il rend compte de sa sanction de détection de défaut en fournissant aux fichiers informatiques des quatrièmes métadonnées, celles-ci étant de préférence écrites dans les fichiers informatiques dans des champs de métadonnées libres et/ou vides et/ou disponibles et/ou éventuellement prévus à cet effet, sans modifier ou corrompre en aucune façon les images et les premières métadonnées, et tout en gardant une traçabilité de cette écriture des quatrièmes métadonnées.

Selon un mode de réalisation préféré de l'invention, le module d'annotation est connecté (de façon directe) à l'unité d'inspection et apte à appliquer un (ou le) marquage suivant des instructions de marquage reçues par l'intermédiaire de l'interface. Plus préférentiellement, l'unité d'inspection comprend un ordinateur et le module de marquage est un module informatique externe à l'ordinateur, de préférence enregistré sur un support lisible par ordinateur qui est intégré et/ou installé sur l'ordinateur, de façon à permettre à un opérateur d'effectuer le marquage d'une image d'un fichier informatique sur base de sa visualisation par l'interface. Le marquage est ainsi complètement déterminé et maîtrisé par l'opérateur.

Selon un mode de réalisation d'invention, correspondant préférentiellement à des étapes de la méthode de contrôle qualité ci-après introduite, les fichiers informatiques lus par le module d'apprentissage comprennent, outre les images et les premières métadonnées, aussi les troisièmes métadonnées de marquage générées par l'application du marquage au moyen du module d'annotation. Le module d'apprentissage développe et/ou entraîne de préférence l'algorithme sur base des images marquées (et donc des premières et troisièmes métadonnées) au moyen du module d'annotation, de préférence par un opérateur tel qu'il est explicité ci-dessus. Le module d'apprentissage met de préférence à profit toutes techniques informatiques, algorithmiques et numériques accessibles, entrainant l'algorithme sur base de machine learning au moyen des images marquées. Le module d'apprentissage est préférentiellement déconnecté des autres modules durant un processus effectif de contrôle qualité, laissant seuls les modules de sanction et d'inspection actifs. Le module d'apprentissage utilise le marquage indiqué par un opérateur sur les images pour entraîner l'algorithme, de façon à développer des versions successives plus performantes de celui-ci. Toutefois, ces développements ne se font de préférence pas lors du processus effectif de contrôle qualité mais indépendamment, et par version. Ce n'est que lorsqu'une version de l'algorithme est développée qu'il peut être envoyé et/ou téléchargé et/ou installé et/ou exécuté sur le module de sanction pour être réellement utilisé dans le processus de contrôle qualité. Dès lors, si le module d'apprentissage est préférentiellement connecté à la base donnée de façon à pouvoir lire les fichiers informatiques, il n'est pas nécessaire qu'il soit connecté au reste du système selon l'invention. Toutefois, une réalisation de l'invention avec une connexion permanente du module d'apprentissage au module de sanction ne se départirait pas du cadre de l'invention.

Préférentiellement, le marquage des images comprend des annotations et/ou symboles et/ou couleurs déterminés sur base d'un gradient d'un niveau d'intensité d'au moins une portion des images. Préférentiellement, le niveau d'intensité est un niveau d'intensité de couleur et/ou de gris. Avantageusement, le marquage sur base d'un tel gradient permet de tenir compte de l'évolution directionnelle d'intensité des couleurs et/ou de gris. En effet, une couleur et/ou d'une nuance de gris considérée seule sur une image ne peut être valablement assimilée à un défaut sans la resituée dans son contexte, c'est-à-dire dans une évolution d'intensité de couleur et/ou de gris de l'image. Avantageusement, différentes annotations et/ou symboles et/ou couleurs peuvent être employées dans le marquage pour désigner différentes types des défauts à détecter durant le contrôle qualité, de même que différents niveaux de fiabilité d'une indication du marquage. Par exemple, un marquage d'une fissure peut être fait par un trait, alors qu'un marquage d'un manque de matière peut être fait par une ellipse. Par exemple, un marquage d'une indication litigieuse peut être fait par une couleur rouge, et un marquage d'une indication hautement fiable peut être fait dans une autre couleur verte. De préférence, le marquage qu'il est permis d'appliquer au moyen du module d'annotation est déterminé lors d'une programmation de ce dernier, de façon à minimiser le nombre d'images à marquer pour effectuer un entraînement de l'algorithme au moyen du module d'apprentissage.

Préférentiellement, le module d'annotation permet de marquer plusieurs fenêtrages d'au moins une zone d'intérêt des images. Le marquage est ainsi avantageusement appliqué uniquement sur des zones d'intérêt des images, ce qui permet un gain de temps sensible pour l'entrainement de l'algorithme au moyen du module d'apprentissage. Dans le cas d'un contrôle qualité des aubes d'une turbomachine, par exemple, les soudures sont des zones particulièrement sensibles à inspecter. Le marquage d'une image d'une aube peut ainsi être limité à des zones d'intérêt qui comprend les zones de soudure de l'aube. Pour un marquage basé sur au moins un gradient d'un niveau d'intensité, l'application d'un marquage sur une pluralité de fenêtrages d'une zone d'intérêt d'une image permet avantageusement de tenir compte des variations du niveau d'intensité selon plusieurs directions définies dans ces fenêtrages, et d'obtenir un marquage globalement plus précis contribuant à un entrainement particulièrement rapide de l'algorithme au moyen du module d'apprentissage.

Selon un mode de réalisation préféré de l'invention, le système comprend en outre un module d'analyse pour :
- lire des fichiers informatiques comprenant les deuxièmes et quatrièmes métadonnées ;
- déterminer une performance de l'algorithme par une comparaison des deuxièmes et quatrièmes métadonnées des fichiers informatiques.
De préférence, le module d'analyse évalue la correspondance des deuxièmes et quatrièmes métadonnées issues du processus de sanction et d'inspection d'un fichier informatique. Ces deuxièmes métadonnées sont de préférence générées par instructions d'inspection reçues par un opérateur via l'interface, alors que les quatrièmes métadonnées sont de préférence générées automatiques par le module de sanction lors de l'exécution de l'algorithme au regard des images et des premières métadonnées. Ainsi, le module d'analyse permet de comparer d'une certaine façon l'avis de l'algorithme et l'avis de l'opérateur concernant la qualité et/ou la détection de défaut des pièces fabriqués sur base des fichiers informatiques. En particulier, le module d'analyse permet d'évaluer les écarts entre ces avis, et donc la performance de l'algorithme. La performance est de préférence déterminée aussi à partir :
- d'un taux de faux positifs de détection de défaut des pièces fabriquées, et
- d'un taux de faux négatifs de détection de défaut des pièces fabriquées.
les taux de faux positifs et de faux négatifs étant déterminés sur base d'un nombre prédéterminé d'images. Préférentiellement, le taux de faux positifs est inférieur à 5%. Préférentiellement, le taux de faux négatifs est inférieur à 0,1%, plus préférentiellement inférieur à 0,01%. Il est crucial que le taux de faux négatifs soit quasiment nul afin d'assurer une fiabilité optimale de l'algorithme. Le module d'analyse comprend de préférence une interface de sortie, un écran et/ou une imprimante par exemple, pour transmettre des données de la comparaison et/ou la performance de l'algorithme. De cette façon, les résultats d'analyse fournie par le module d'analyse peuvent être consultés de façon à vérifier et/ou contrôler à tout moment la fiabilité du système selon l'invention, de même que pour tracer les écritures et/ou modifications de métadonnées des fichiers informatiques.

La présente invention propose également une méthode de contrôle qualité de pièces fabriquées telle que définie par la revendication 10.

La méthode selon l'invention comprend aussi de préférence les étapes suivantes lorsque le système comprend un module d'analyse tel que décrit ci-dessus et lorsque les quatrièmes métadonnées comprennent une métadonnée qui correspond une instruction de visualisation ou de non-visualisation d'une image associée par l'interface tel qu'il est décrit ci-dessus :
(xii) déterminer une performance de la deuxième version de l'algorithme par comparaison des deuxièmes et quatrièmes métadonnées de la deuxième sélection des fichiers informatiques au moyen du module d'analyse ;
(xiii) lire une troisième sélection des fichiers informatiques au moyen du module de sanction, exécuter la deuxième version de l'algorithme sur le module de sanction, et fournir les quatrièmes métadonnées de détection à cette troisième sélection des fichiers informatiques ;
   une métadonnée parmi les quatrièmes métadonnées de chacun des fichiers informatiques de cette troisième sélection étant associée par la performance déterminée à l'étape (xii) ;
(xiv) lire la troisième sélection des fichiers informatiques via le module d'inspection, et visualiser les images d'une partie des fichiers informatiques de la troisième sélection dont ladite métadonnée est d'une valeur prédéterminée, au moyen de l'interface de l'unité d'inspection ;
(xv) appliquer le marquage aux images de la partie des fichiers informatiques de la troisième sélection et fournir les troisièmes métadonnées de marquage à cette partie des fichiers informatiques de la troisième sélection au moyen du module d'annotation ;
(xvi) fournir les deuxièmes métadonnées d'inspection à la partie des fichiers informatiques de la troisième sélection au moyen du module d'inspection ;
(xvii) qualifier des pièces fabriquées sur base des deuxièmes et des quatrièmes métadonnées de la troisième sélection des fichiers informatiques, la qualification obtenue comprenant une information parmi une détection d'un défaut ou une absence de défaut de ces pièces fabriquées ;
(xviii) entraîner la deuxième version de l'algorithme sur base de la partie des fichiers informatiques de la troisième sélection, au moyen du module d'apprentissage ;
(xix) développer une troisième version de l'algorithme sur base de l'entrainement effectué à l'étape (xviii).

La méthode selon l'invention comprend préférentiellement aussi l'étape suivante:
(xx) répéter les étapes (viii) à (xix) avec au moins une version de l'algorithme sur des (autres) sélections des fichiers informatiques.

La méthode selon l'invention permet d'effectuer un contrôle qualité fiable, rapide et efficace de pièces fabriquées grâce au système selon l'invention. En particulier, la méthode peut être utilisée pour contrôler la qualité des soudures des aubes d'une turbomachine d'aéronef en réduisant le temps d'inspection de l'opérateur. En effet, la méthode propose un développement par version d'un algorithme configuré pour détecter des défauts des pièces fabriquées sur base des images et des premières métadonnées. Une première version de l'algorithme est développée (préférentiellement de façon théorique à l'étape (iv), et entraînée à l'étape (vi) grâce au marquage des images judicieusement appliqué à l'étape (v) sur les images des fichiers informatiques de la première sélection. Une deuxième version de l'algorithme est développée à l'étape (vii) et résulte de cet entraînement. La méthode propose alors d'utiliser cette deuxième version de l'algorithme dans la qualification de pièces fabriquées (ou plus précisément d'une partie des pièces fabriquées) sur base d'une deuxième sélection des fichiers informatiques. Ceux-ci sont lus à la fois par le module d'inspection et par le module de sanction, la deuxième version de l'algorithme étant exécuté sur ce dernier. De cette façon, des deuxièmes métadonnées sont fournies aux fichiers informatiques de la deuxième sélection en étant induites par les instructions d'un opérateur via l'interface de l'unité d'inspection, et des quatrièmes métadonnées sont fournies aux fichiers informatiques de la deuxième sélection, étant induites par l'exécution de la deuxième version de l'algorithme. En particulier, l'ordre d'exécution des étapes (viii) et (ix)-(x) peut être changé, l'essentiel étant qu'à la fois les deuxièmes et les quatrièmes métadonnées soient fournies aux fichiers informatiques de la deuxième sélection. Ces fichiers informatiques comprenant un résultat de contrôle qualité d'un opérateur (via les deuxièmes métadonnées) et un résultat de contrôle qualité de la deuxième version de l'algorithme (via les quatrièmes métadonnées), ces résultats peuvent être comparés par le module d'analyse, de façon à déterminer une performance de la deuxième version de l'algorithme. De préférence, la performance est associée à un niveau de fiabilité de la deuxième version de l'algorithme pour la détection de (certains) défauts. Cette performance peut être encodée dans les quatrièmes métadonnées qui seront fournies par après par le module de sanction, par l'intermédiaire d'une métadonnée particulière qui indiquerait que la performance de la deuxième version de l'algorithme est suffisante pour une absence de défaut (ou un défaut détecter) et qu'un retour de l'opérateur par l'intermédiaire de l'unité d'inspection n'est pas nécessaire. De cette façon, cette métadonnée est préférentiellement lue par le module d'inspection de façon à l'instruire ou non de la nécessité de permettre à l'opérateur de visualiser ou non l'image associée via l'interface. Il ne peut être exclus que la performance de la deuxième version de l'algorithme soit si faible que la méthode doive être reprise depuis le début avec un nouveau développement d'un algorithme. Si la deuxième version de l'algorithme a une performance suffisante, elle est validée et servira de base à un contrôle qualité semi-automatique, de même qu'à de nouveaux entraînement de l'algorithme tel que détaillé aux étapes (xiii) à (xix). Dans ce cas, c'est bien le module de sanction qui fournira des quatrièmes métadonnées aux nouveaux fichiers informatiques lus avant que le module d'inspection de fournisse des éventuelles deuxièmes métadonnées à ces fichiers informatiques. En particulier, cette deuxième version de l'algorithme est utilisée pour détecter de façon autonome des défauts des pièces fabriquées sur base des images et des premières métadonnées des fichiers informatiques de la troisième sélection qui ne sont pas dans ladite partie car la performance de cette deuxième version est suffisante. Ladite partie des fichiers informatiques de la troisième sélection ne peut pas être traitée de façon autonome par la deuxième version de l'algorithme car sa performance n'est pas suffisante. Cette information se retrouve dans ladite métadonnée associée aux quatrièmes métadonnées qui indique alors au module d'inspection que les images des fichiers informatiques de la partie de la troisième sélection devront bien être visualisées par l'opérateur via l'interface pour recevoir également les instructions d'inspection de l'opérateur fournies par les deuxièmes métadonnées. Dans ce cas, au moins pour cette partie de la troisième sélection (mais potentiellement pour tous les fichiers informatiques lus par le module d'inspection), les fichiers informatiques sont aussi enrichis de troisièmes métadonnées de marquage sur base de laquelle la deuxième version de l'algorithme pourra à nouveau être entraînée à l'étape (xviii) pour développer à l'étape (xix) une troisième version de l'algorithme au moyen du module d'apprentissage. Cette troisième version sera alors supposée plus performante que la deuxième version vu qu'elle aura été développée au regard des fichiers informatiques de la partie de la troisième sélection, qui étaient justement les fichiers pour lesquelles la performance de la deuxième version de l'algorithme n'était pas suffisante. Les étapes (viii) à (xix) peuvent alors être itérée avec une ou plusieurs versions de l'algorithme sur des autres sélections des fichiers informatiques. L'algorithme est alors entraîné par version successive à chaque fois plus performante. Une fois qu'une (deuxième) version de l'algorithme est validée (étant suffisamment performante), le système de contrôle qualité devient effectivement un système semi-automatique. Dans tous les cas, le développement de (cette deuxième version de) l'algorithme et de ces versions ultérieures ne contraignent avantageusement pas le cycle normal de validation des pièces fabriquées lors du contrôle qualité, car à tout instant de l'exécution de la méthode, le contrôle qualité se poursuit. En particulier, il n'est pas nécessaire que l'exécution des étapes (ii) et (iii) soit finie avant d'exécuter une des étapes suivantes. En effet, l'acquisition des images et l'enregistrement des fichiers informatiques sur la base de donnée peut se faire durant la suite du processus de contrôle qualité, l'essentiel étant d'avoir une première sélection de fichiers informatiques, puis une deuxième sélection de fichiers informatiques, etc. pour poursuivre ce processus.

### Brève description des figures

D'autres caractéristiques et avantages de la présente invention apparaîtront à la lecture de la description détaillée qui suit pour la compréhension de laquelle on se reportera aux figures annexées parmi lesquelles :

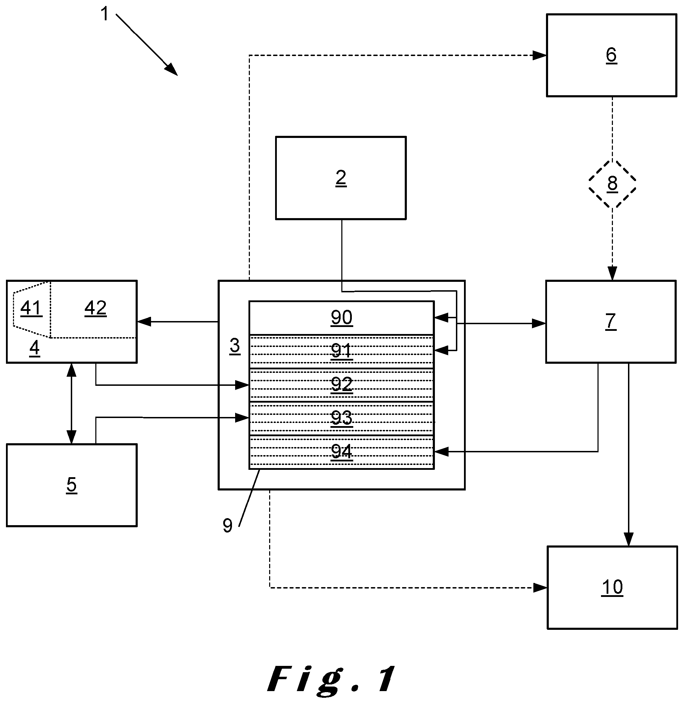

- la figure 1 illustre une vue schématique d'un système de contrôle qualité selon un mode de réalisation préféré de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

Cette partie présente une description détaillée de modes de réalisation de la présente invention. Celle-ci est décrite avec des réalisations particulières et des références à des figures mais l'invention n'est pas limitée par celles-ci. En particulier, les dessins ou figures décrits ci-dessous ne sont que schématiques et ne sont pas limitants.

L'usage, dans le présent document, du verbe « comprendre », de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « I' », pour introduire un élément n'exclut pas la présence d'une pluralité de ces éléments. Les termes « premier », « deuxième », « troisième » et « quatrième » sont, quant à eux, utilisés dans le cadre de ce document exclusivement pour différencier différents éléments, sans impliquer d'ordre entre ces éléments.

La figure 1 illustre un système 1 de contrôle qualité de pièces fabriquées comprenant des aubes soudées d'une turbomachine d'aéronef. Le système 1 comprend un dispositif d'acquisition 2 consistant en un appareil de radiographie par rayons X pour fournir des images 90 par rayons X des pièces fabriquées, celles-ci étant enregistrées dans une base de données 3 du système 1 sous la forme de fichiers informatiques 9 d'un format de type diconde. Ces fichiers informatiques 9 comprennent des premières métadonnées 91 incorruptibles de lecture des images 90 ainsi que des champs libres et/ou vides étant éditables pour l'écriture d'autres métadonnées 92, 93, 94. Une transmission de données est bien entendu possible entre le dispositif d'acquisition 2 et la base de données 3, par exemple, via une connexion avec ou sans fil. Le système 1 comprend également une unité d'inspection 4 comprenant un module d'inspection 42 qui comprend un processeur de l'ordinateur pour lire les fichiers informatiques 9, et une interface 41 qui comprend un écran de l'ordinateur permettant de visualiser les images 90 des fichiers informatiques 9 qui sont lus par le module d'inspection 42. Cette interface 41 comprend également une souris de l'ordinateur et/ou un clavier de l'ordinateur et/ou des composantes tactiles de l'écran de l'ordinateur permettant à un opérateur extérieur au système 1 de transmettre des instructions d'inspection qui correspondent aux images 90 qu'il visualise dans l'écran au module d'inspection 42. Le module d'inspection 42 reçoit alors ces instructions et les transforme en des deuxièmes métadonnées qui sont fournies aux fichiers informatiques 9. Des échanges de données sont en particulier possibles entre l'ordinateur et la base de données 3, par exemple, via une connexion avec ou sans fil. Le système 1 comprend également un module d'annotation 5 connecté directement à l'ordinateur de l'unité d'inspection 4. Le module d'annotation 5 rend possible la réception d'autres instructions par l'interface 41. Par exemple, une lecture des fichiers informatiques se fait par le module d'annotation 5 au moyen du processeur de l'ordinateur. L'opérateur peut alors transmettre des instructions de marquage qui correspondent aux images 90 qu'il visualise dans l'écran au module d'annotation 5. Ce marquage correspond typiquement à des indications de défauts qu'il perçoit au regard de les images 90. Le module d'annotation 5 permet d'une part à l'opérateur d'appliquer un tel marquage aux images 90 via l'interface 41, et d'autre part, de recueillir ses instructions de marquage pour les transformer en des troisièmes métadonnées de marquage qu'il fournit alors aux fichiers informatiques 9. Le système 1 comprend un module d'apprentissage 6 qui est de préférence isolé du reste du système et qui n'est pas connecté de façon directe et/ou permanente aux autres modules du système 1. Ce module d'apprentissage 6 est capable de lire les fichiers informatiques et d'utiliser sa lecture des troisièmes métadonnées de marquage pour développer et entraîner un algorithme 8 destiné à détecter des défauts des pièces fabriquées sur base des images 90 et des premières métadonnées 91 des fichiers informatiques uniquement. Cet algorithme 8 est le produit du module d'apprentissage 6 qui est transmis et/ou installé et/ou exécuté sur un module de sanction 7 du système 1. Ce module de sanction 7 comprend de préférence un processeur pour lire des fichiers informatiques 9 et pour exécuter l'algorithme 8, de façon à générer des quatrièmes métadonnées 94 de détection de défaut qui sont alors fournies aux fichiers informatiques 9. Des échanges de données sont possibles entre le processeur du module de sanction 7 et la base de données 3, par exemple, via une connexion avec ou sans fil. Enfin, le système 1 comprend également un module d'analyse 10 muni d'un processeur apte à lire les fichiers informatiques 9 et à comparer leurs deuxièmes et quatrièmes métadonnées éventuelles pour en déduire une performance de l'algorithme 8 et/ou donner un compte-rendu du traitement et/ou des modifications des fichiers informatiques 9 par le module de sanction 7 à un utilisateur externe au système 1.

La figure 1 représente des flèches continues pour les transmissions de données dans le cycle normal de contrôle qualité des pièces fabriquées (lors du fonction du système 1) et des flèches pointillées pour les transferts de données qui sont préférentiellement effectués à distance et/ou hors ligne et/ou hors du cycle normal de contrôle qualité des pièces fabriquées. Le résumé de l'invention comprend une description d'une méthode d'utilisation du système 1.

En résumé, l'invention concerne un système 1 de contrôle qualité de pièces fabriquées, ce système 1 comprenant un dispositif d'acquisition 2 pour fournir des images 90 de ces pièces fabriquées, une base de donnée 3 et une unité d'inspection 4 comprenant une interface 41 pour visualiser les images 90, auxquels sont intégrés des modules d'annotation 5, d'apprentissage 6 et de sanction 7, de façon à permettre une détection de défauts semi-automatique. L'invention concerne également une méthode de contrôle qualité de pièces fabriquées au moyen dudit système 1.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limitée aux exemples illustrés et/ou décrits ci-dessus.

## Revendications

1. Système (1) de contrôle qualité de pièces fabriquées comprenant :
- un dispositif d'acquisition (2) pour fournir des images (90) des pièces fabriquées ;
- une base de données (3) pour enregistrer les images (90) ;
- une unité d'inspection (4) comprenant :
• une interface (41) pour visualiser les images (90) ;
la base de données (3) comprenant une pluralité fichiers informatiques (9) dont chacun comprend :
• une des images (90) ;
• des premières métadonnées (91) de lecture de l'image (90) ;
dans lequel
l'interface (41) est apte à recevoir des instructions d'un opérateur ; et
l'unité d'inspection (4) comprend en outre :
• un module d'inspection (42) connecté à l'interface (41) pour :
lire les fichiers informatiques (9), et
fournir aux fichiers informatiques (9) des deuxièmes métadonnées (92) d'inspection des images (90) générées par des instructions d'inspection reçues par l'intermédiaire de l'interface (41) lorsque l'opérateur visualise les images (90) via l'interface (41) ;
et dans lequel le système (1) comprend en outre :
- un module d'annotation (5) pour :
• appliquer un marquage aux images (90) ;
• fournir aux fichiers informatiques (9) des troisièmes métadonnées (93) de marquage générées par l'application du marquage ;
le module d'annotation (5) étant connecté à l'unité d'inspection (4) pour appliquer le marquage suivant des instructions de marquage reçues par l'intermédiaire de l'interface (41) aux images (90) visualisées via l'interface (41) ;
- un module d'apprentissage (6) pour :
• lire les fichiers informatiques (9) ;
• développer et/ou entraîner un algorithme (8) sur base des fichiers informatiques (9), l'algorithme (8) étant configuré pour détecter des défauts des pièces fabriquées sur base des images (90) et des premières métadonnées (91) ;
- un module de sanction (7) pour :
• lire les fichiers informatiques (9) ;
• exécuter l'algorithme (8) ;
• fournir aux fichiers informatiques (9) des quatrièmes métadonnées (94) de détection générées par l'exécution de l'algorithme (8) ;
le système étant tel que
les fichiers informatiques (9) lus par le module d'inspection (42) comprennent les images (90), les premières (91) et les quatrièmes (94) métadonnées,
les fichiers informatiques (9) lus par le module d'apprentissage (6) comprennent les images (90), les premières (91) et les troisièmes (93) métadonnées,
et les quatrièmes métadonnées (94) de chacun des fichiers informatiques (9) comprennent une métadonnée qui, lorsqu'elle est lue par le module d'inspection (42) instruit soit une visualisation de l'image (90) du fichier informatique (9) via l'interface (41), soit une non visualisation de celle-ci.

2. Système (1) selon la revendication 1, dans lequel le marquage des images (90) comprend des annotations et/ou symboles et/ou couleurs déterminés sur base d'un gradient d'un niveau d'intensité d'au moins une portion des images (90).

3. Système (1) selon l'une quelconque des revendications précédentes, **caractérisé en ce que** les fichiers informatiques (9) lus par le module de sanction (7) ne comprennent que les images (90) et les premières (91) métadonnées.

4. Système (1) selon l'une quelconque des revendications précédentes, **caractérisé en ce que** l'image (90) et les premières métadonnées (91) de chaque fichier informatique (9) sont incorruptibles.

5. Système (1) selon l'une quelconque des revendications précédentes, **caractérisé en ce qu'**il comprend en outre un module d'analyse (10) pour :
• lire des fichiers informatiques (9) comprenant les deuxièmes (92) et les quatrièmes (94) métadonnées ;
• déterminer une performance de l'algorithme (8) par comparaison des deuxièmes (92) et quatrièmes (94) métadonnées des fichiers informatiques (9).

6. Système (1) selon la revendication 5, dans lequel le module d'analyse (10) comprend une interface de sortie pour transmettre des données de comparaison des deuxièmes (92) et quatrièmes (94) métadonnées des fichiers informatiques (9) et/ou la performance de l'algorithme (8).

7. Système (1) selon l'une quelconque des revendications précédentes, **caractérisé en ce que** l'unité d'inspection (4) comprend un ordinateur, l'interface (41) comprenant de préférence un écran et/ou un clavier et/ou une souris de l'ordinateur.

8. Système (1) selon l'une quelconque des revendications précédentes, **caractérisé en ce que** le dispositif d'acquisition (2) comprend un appareil d'imagerie par rayons X, et **en ce que** les images (90) sont des images par rayons X.

9. Système (1) selon l'une quelconque des revendications précédentes, **caractérisé en ce que** les pièces fabriquées comprennent des aubes soudées d'une turbomachine d'un aéronef.

10. Méthode de contrôle qualité de pièces fabriquées comprenant les étapes suivantes :
(i) fournir un système (1) de contrôle qualité de pièces fabriquées selon l'une quelconque des revendications précédentes ;
(ii) fournir des images (90) des pièces fabriquées au moyen du dispositif d'acquisition (2) sous la forme d'une pluralité de fichiers informatiques (9) dont chacun comprend :
• une des images (90) ;
• des premières métadonnées (91) de lecture de l'image (90) ;
(iii) enregistrer les fichiers informatiques (9) sur la base de donnée (3) ;
(iv) développer une première version d'un algorithme (8) configuré pour détecter des défauts des pièces fabriquées sur base des images (90) et des premières métadonnées (91) ;
(v) appliquer le marquage à une première sélection des images (90) et fournir les troisièmes métadonnées (93) de marquage à une première sélection des fichiers informatiques (9) correspondant à cette première sélection des images (90) au moyen du module d'annotation (5) ;
(vi) entraîner la première version de l'algorithme (8) sur base de la première sélection des fichiers informatiques (9), au moyen du module d'apprentissage (6) ;
(vii) développer une deuxième version de l'algorithme (8) sur base de l'entrainement effectué à l'étape (vi) ;
(viii) lire une deuxième sélection des fichiers informatiques (9) au moyen du module de sanction (7), exécuter la deuxième version de l'algorithme (8) sur le module de sanction (7), et fournir les quatrièmes métadonnées (94) de détection à cette deuxième sélection des fichiers informatiques (9) ;
(ix) lire la deuxième sélection des fichiers informatiques (9) via le module d'inspection (42), et visualiser les images (90) de la deuxième sélection des fichiers informatiques (9) au moyen de l'interface (41) de l'unité d'inspection (4) ;
(x) fournir les deuxièmes métadonnées (94) d'inspection à cette deuxième sélection des fichiers informatiques (9) au moyen du module d'inspection (42) ;
(xi) qualifier des pièces fabriquées sur base des deuxièmes (92) et des quatrièmes (94) métadonnées de la deuxième sélection des fichiers informatiques (9), la qualification obtenue comprenant une information parmi une détection d'un défaut ou une absence de défaut de ces pièces fabriquées.

11. Méthode selon la revendication 10, dans laquelle le système (1) est selon la revendication 5 ;
la méthode comprenant en outre les étapes suivantes :
(xii) déterminer une performance de la deuxième version de l'algorithme (8) par comparaison des deuxièmes (92) et quatrièmes (94) métadonnées de la deuxième sélection des fichiers informatiques (9) au moyen du module d'analyse (10) ;
(xiii) lire une troisième sélection des fichiers informatiques (9) au moyen du module de sanction (7), exécuter la deuxième version de l'algorithme (8) sur le module de sanction (7), et fournir les quatrièmes métadonnées (94) de détection à cette troisième sélection des fichiers informatiques (9) ;
une métadonnée parmi les quatrièmes métadonnées (94) de chacun des fichiers informatiques de cette troisième sélection étant associée par la performance déterminée à l'étape (xii) ;
(xiv) lire la troisième sélection des fichiers informatiques (9) via le module d'inspection (42), et visualiser les images (90) d'une partie des fichiers informatiques (9) de la troisième sélection dont ladite métadonnée est d'une valeur prédéterminée, au moyen de l'interface (41) de l'unité d'inspection (4) ;
(xv) appliquer le marquage aux images (90) de la partie des fichiers informatiques (9) de la troisième sélection et fournir les troisièmes métadonnées (93) de marquage à cette partie des fichiers informatiques (9) de la troisième sélection au moyen du module d'annotation (5) ;
(xvi) fournir les deuxièmes métadonnées (94) d'inspection à la partie des fichiers informatiques (9) de la troisième sélection au moyen du module d'inspection (42) ;
(xvii) qualifier des pièces fabriquées sur base des deuxièmes (92) et des quatrièmes (94) métadonnées de la troisième sélection des fichiers informatiques (9), la qualification obtenue comprenant une information parmi une détection d'un défaut ou une absence de défaut de ces pièces fabriquées ;
(xviii) entraîner la deuxième version de l'algorithme (8) sur base de la partie des fichiers informatiques (9) de la troisième sélection, au moyen du module d'apprentissage (6) ;
(xix) développer une troisième version de l'algorithme (8) sur base de l'entrainement effectué à l'étape (xviii) ;
(xx) répéter les étapes (viii) à (xix) avec au moins une version de l'algorithme (8) sur des sélections de fichiers informatiques (9).

## Patentansprüche

1. System (1) zur Qualitätskontrolle von gefertigten Werkstücken, umfassend:
- eine Erfassungsvorrichtung (2) zum Bereitstellen von Bildern (90) der gefertigten Werkstücke;
- eine Datenbank (3) zum Speichern der Bilder (90);
- eine Inspektionseinheit (4), umfassend:
- eine Schnittstelle (41) zum Betrachten der Bilder (90);
wobei die Datenbank (3) eine Vielzahl von Computerdateien (9) umfasst, von denen jede Folgendes umfasst:
- eins der Bilder (90);
- erste Metadaten (91) zur Wiedergabe des Bildes (90);
wobei
die Schnittstelle (41) fähig ist, Anweisungen eines Bedieners zu empfangen; und
die Inspektionseinheit (4) weiter Folgendes umfasst:
- ein Inspektionsmodul (42), das mit der Schnittstelle (41) verbunden ist zum:
Lesen der Computerdateien (9) und
Bereitstellen von zweiten Metadaten (92) zur Inspektion der Bilder für die Computerdateien (9) bezüglich der Bilder (90), die durch die Inspektionsanweisungen erzeugt werden, die mit Hilfe von der Schnittstelle (41) empfangen werden, wenn der Bediener die Bilder (90) über die Schnittstelle (41) betrachtet, an die Computerdateien;
und wobei das System (1) weiter Folgendes umfasst:
- ein Annotationsmodul (5) zum:
- Anbringen einer Markierung an die Bilder (90);
- Bereitstellen von dritten Metadaten (93) zur Markierung, die durch das Anbringen der Markierung erzeugt werden, an die Computerdateien (9);
wobei das Annotationsmodul (5) mit der Inspektionseinheit (4) zum Anbringen der Markierung an den Bildern (90), die über die Schnittstelle (41) betrachtet werden, den Markierungsanweisungen folgend, die mit Hilfe von der Schnittstelle (41) empfangen werden, verbunden ist;
- ein Lernmodul (6) zum:
- Lesen der Computerdateien (9);
- Entwickeln und/oder Trainieren eines Algorithmus (8) auf Basis der Computerdateien (9), wobei der Algorithmus (8) konfiguriert ist zum Erkennen von Defekten der gefertigten Werkstücke auf Basis von Bildern (90) und der ersten Metadaten (91);
- ein Auswertemodul (7) zum:
- Lesen der Computerdateien (9);
- Ausführen des Algorithmus (8);
- Bereitstellen von vierten Metadaten (94) zur Erkennung, die durch die Ausführung des Algorithmus (8) erzeugt werden, an die Computerdateien (9);
das System so ist, dass,
die durch das Inspektionsmodul (42) gelesenen Computerdateien (9) die Bilder (90), die ersten (91) und die vierten (94) Metadaten umfassen,
die durch das Lernmodul (6) gelesenen Computerdateien (9) die Bilder (90), die ersten (91) und die dritten (93) Metadaten umfassen,
und die vierten Metadaten (94) von jeder der Computerdateien (9) Metadaten umfassen, die, wenn sie durch das Inspektionsmodul (42) gelesen werden, entweder eine Anzeige des Bildes (90) der Computerdatei (9) über die Schnittstelle (41) oder eine Nicht-Anzeige von diesem anweisen.

2. System (1) nach Anspruch 1, wobei die Markierung der Bilder (90) Annotationen und/oder Symbole und/oder Farben umfasst, die auf Basis eines Gradienten eines Intensitätsniveaus von mindestens einem Anteil der Bilder (90) bestimmt werden.

3. System (1) nach einem der vorstehenden Ansprüche, **dadurch gekennzeichnet, dass** die durch das Auswertemodul (7) gelesenen Computerdateien (9) nur die Bilder (90) und die ersten Metadaten (91) umfassen.

4. System (1) nach einem der vorstehenden Ansprüche, **dadurch gekennzeichnet, dass** das Bild (90) und die ersten Metadaten (91) von jeder Computerdatei (9) unveränderlich sind.

5. System (1) nach einem der vorstehenden Ansprüche, **dadurch gekennzeichnet, dass** es weiter ein Analysemodul (10) umfasst zum:
- Lesen der Computerdateien (9), die die zweiten (92) und die vierten (94) Metadaten umfassen;
- Bestimmen einer Leistung des Algorithmus (8) durch Vergleichen der zweiten (92) und vierten (94) Metadaten der Computerdateien (9).

6. System (1) nach Anspruch 5, wobei das Analysemodul (10) eine Ausgangsschnittstelle zum Übertragen von Vergleichsdaten der zweiten (92) und vierten (94) Metadaten der Computerdateien (9) und/oder der Leistung des Algorithmus (8) umfasst.

7. System (1) nach einem der vorstehenden Ansprüche, **dadurch gekennzeichnet, dass** die Inspektionseinheit (4) einen Computer umfasst, wobei die Schnittstelle (41) vorzugsweise einen Bildschirm und/oder eine Tastatur und/oder eine Maus des Computers umfasst.

8. System (1) nach einem der vorstehenden Ansprüche, **dadurch gekennzeichnet, dass** die Erfassungsvorrichtung (2) eine Einrichtung zur Bildgebung durch Röntgenstrahlung umfasst, und dadurch, dass die Bilder (90) Röntgenbilder sind.

9. System (1) nach einem der vorstehenden Ansprüche, **dadurch gekennzeichnet, dass** die gefertigten Werkstücke geschweißte Schaufeln eines Turbotriebwerks eines Luftfahrzeugs umfassen.

10. Verfahren zur Qualitätskontrolle von gefertigten Werkstücken, umfassend die folgenden Schritte:
(i) Bereitstellen eines Systems (1) zur Qualitätskontrolle von gefertigten Werkstücken nach einem der vorstehenden Ansprüche;
(ii) Bereitstellen von Bildern (90) der gefertigten Werkstücke mittels der Erfassungsvorrichtung (2) in Form einer Vielzahl von Computerdateien (9), von denen jede Folgendes umfasst:
- eins der Bilder (90);
- erste Metadaten (91) zur Wiedergabe des Bildes (90);
(iii) Speichern der Computerdateien (9) in der Datenbank (3);
(iv) Entwickeln einer ersten Version eines Algorithmus (8), der konfiguriert ist zum Erkennen von Defekten der gefertigten Werkstücke auf Basis der Bilder (90) und der ersten Metadaten (91);
(v) Anbringen der Markierung an einer ersten Auswahl von Bildern (90) und Bereitstellen der dritten Metadaten (93) zur Markierung an eine erste Auswahl der Computerdateien (9), die dieser ersten Auswahl von Bildern (90) entspricht, mittels des Annotationsmoduls (5);
(vi) Trainieren der ersten Version des Algorithmus (8) auf Basis der ersten Auswahl von Computerdateien (9) mittels des Lernmoduls (6);
(vii) Entwickeln einer zweiten Version des Algorithmus (8) auf Basis des in Schritt (vi) vorgenommenen Trainings;
(viii) Lesen einer zweiten Auswahl von Computerdateien (9) mittels des Auswertemodul (7), Ausführen der zweiten Version des Algorithmus (8) in dem Auswertemodul (7) und Bereitstellen der vierten Metadaten (94) zur Erkennung an diese zweite Auswahl von Computerdateien (9);
(ix) Lesen der zweiten Auswahl von Computerdateien (9) über das Inspektionsmodul (42) und Anzeigen der Bilder (90) der zweiten Auswahl der Computerdateien (9) mittels der Schnittstelle (41) der Inspektionseinheit (4);
(x) Bereitstellen der zweiten Metadaten (92) zur Inspektion an diese zweite Auswahl von Computerdateien (9) mittels des Inspektionsmoduls (42);
(xi) Einstufen der gefertigten Werkstücke auf Basis der zweiten (92) und der vierten (94) Metadaten der zweiten Auswahl von Computerdateien (9), wobei die erhaltene Einstufung Informationen unter einer Erkennung eines Defekts oder einer Abwesenheit eines Defekts dieser gefertigten Werkstücke umfasst.

11. Verfahren nach Anspruch 10, wobei das System (1) nach Anspruch 5 ist;
wobei das Verfahren weiter die folgenden Schritte umfasst:
(xii) Bestimmen einer Leistung der zweiten Version des Algorithmus (8) durch Vergleichen der zweiten (92) und vierten (94) Metadaten der zweiten Auswahl von Computerdateien (9) mittels des Analysemoduls (10);
(xiii) Lesen einer dritten Auswahl von Computerdateien (9) mittels des Auswertemodul (7), Ausführen der zweiten Version des Algorithmus (8) in dem Auswertemodul (7) und Bereitstellen der vierten Metadaten (94) zur Erkennung an diese dritte Auswahl von Computerdateien (9);
wobei Metadaten unter den vierten Metadaten (94) von jeder der Computerdateien dieser dritten Auswahl mit der in Schritt (xii) bestimmten Leistung assoziiert sind;
(xiv) Lesen der dritten Auswahl von Computerdateien (9) über das Inspektionsmodul (42) und Anzeigen der Bilder (90) eines Teils der Computerdateien (9) der dritten Auswahl, von denen die Metadaten ein vorbestimmter Wert sind, mittels der Schnittstelle (41) der Inspektionseinheit (4);
(xv) Anbringen der Markierung an die Bilder (90) des Teils der Computerdateien (9) der dritten Auswahl und Bereitstellen der dritten Metadaten (93) zur Markierung an diesen Teil von Computerdateien (9) der dritten Auswahl mittels des Annotationsmoduls (5);
(xvi) Bereitstellen der zweiten Metadaten (92) zur Inspektion an den Teil von Computerdateien (9) der dritten Auswahl mittels des Inspektionsmoduls (42);
(xvii) Einstufen der gefertigten Werkstücke auf Basis der zweiten (92) und der vierten (94) Metadaten der dritten Auswahl von Computerdateien (9), wobei die erhaltene Einstufung Informationen unter einer Erkennung eines Defekts oder einer Abwesenheit eines Defekts dieser gefertigten Werkstücke umfasst;
(xviii) Trainieren der zweiten Version des Algorithmus (8) auf Basis des Teils von Computerdateien (9) der dritten Auswahl mittels des Lernmoduls (6);
(xix) Entwickeln einer dritten Version des Algorithmus (8) auf Basis des in Schritt (xviii) vorgenommenen Trainings;
(xx) Wiederholen der Schritte (viii) bis (xix) mit mindestens einer Version des Algorithmus (8) an Auswahlen von Computerdateien (9).

## Claims

1. Quality control system (1) for manufactured components comprising:
- an acquisition device (2) for providing images (90) of the manufactured components;
- a database (3) for recording the images (90);
- an inspection unit (4) comprising:
- an interface (41) for displaying the images (90);
the database (3) comprising a plurality of computer files (9), each of which comprises:
- one of the images (90);
- first reading metadata (91) of the image (90);
wherein
the interface (41) is capable of receiving instructions from an operator; and
the inspection unit (4) further comprises:
- an inspection module (42) which is connected to the interface (41) in order to:
read the computer files (9), and
provide to the computer files (9) second inspection metadata (92) of the images (90) generated by inspection instructions received via the interface (41) when the operator displays the images (90) via the interface (41);
and wherein the system (1) further comprises:
- an annotation module (5) for :
- applying a marking to the images (90);
- providing to the computer files (9) third marking metadata (93) generated by the application of the marking;
the annotation module (5) being connected to the inspection unit (4) in order to apply the marking according to marking instructions received via the interface (41) to the images (90) displayed via the interface (41);
- a learning module (6) for:
- reading the computer files (9);
- developing and/or training an algorithm (8) based on the computer files (9), the algorithm (8) being configured to detect defects of the manufactured components based on the images (90) and first metadata (91);
- an evaluation module (7) for:
- reading the computer files (9);
- executing the algorithm (8);
- providing to the computer files (9) fourth detection metadata (94) generated by the execution of the algorithm (8);
the system being such that
the computer files (9) read by the inspection module (42) comprise the images (90), the first (91) and the fourth (94) metadata,
the computer files (9) read by the learning module (6) comprise the images (90), the first (91) and the third (93) metadata,
and the fourth metadata (94) of each of the computer files (9) comprise a metadata item which, when it is read by the inspection module (42), instructs either a display of the image (90) of the computer file (9) via the interface (41) or a non-display thereof.

2. System (1) according to claim 1, wherein the marking of the images (90) comprises annotations and/or symbols and/or colors which are determined based on a gradient of a level of intensity of at least one portion of the images (90).

3. System (1) according to either of the preceding claims, **characterized in that** the computer files (9) read by the evaluation module (7) comprise only the images (90) and the first metadata (91).

4. System (1) according to any one of the preceding claims, **characterized in that** the image (90) and the first metadata (91) of each computer file (9) are immutable.

5. System (1) according to any one of the preceding claims, **characterized in that** it further comprises an analysis module (10) for:
- reading computer files (9) comprising the second (92) and the fourth (94) metadata;
- determining a performance of the algorithm (8) by comparing the second (92) and fourth (94) metadata of the computer files (9).

6. System (1) according to claim 5, wherein the analysis module (10) comprises an output interface for transmitting comparison data of the second (92) and fourth (94) metadata of the computer files (9) and/or the performance of the algorithm (8).

7. System (1) according to any one of the preceding claims, **characterized in that** the inspection unit (4) comprises a computer, the interface (41) preferably comprising a screen and/or a keyboard and/or a mouse of the computer.

8. System (1) according to any one of the preceding claims, **characterized in that** the acquisition device (2) comprises an X-ray imaging device, and **in that** the images (90) are X-ray images.

9. System (1) according to any one of the preceding claims, **characterized in that** the manufactured components comprise welded vanes of an aircraft turbomachine.

10. Quality control method for manufactured components comprising the following steps:
(i) providing a quality control system (1) for manufactured components according to any one of the preceding claims;
(ii) providing images (90) of manufactured components using the acquisition device (2) in the form of a plurality of computer files (9), each of which comprises:
- one of the images (90);
- first reading metadata (91) of the image (90);
(iii) recording the computer files (9) on the database (3);
(iv) developing a first version of an algorithm (8) which is configured to detect defects of manufactured components based on the images (90) and first metadata (91);
(v) applying the marking to a first selection of images (90) and providing the third marking metadata (93) to a first selection of computer files (9) which correspond to this first selection of images (90) using the annotation module (5);
(vi) training the first version of the algorithm (8) based on the first selection of computer files (9), using the learning module (6);
(vii) developing a second version of the algorithm (8) based on the training carried out in step (vi);
(viii) reading a second selection of computer files (9) using the evaluation module (7), executing the second version of the algorithm (8) on the evaluation module (7), and providing the fourth detection metadata (94) to this second selection of computer files (9);
(ix) reading the second selection of computer files (9) via the inspection module (42), and displaying the images (90) of the second selection of computer files (9) using the interface (41) of the inspection unit (4);
(x) providing the second inspection metadata (92) to this second selection of computer files (9) using the inspection module (42);
(xi) qualifying manufactured components based on the second (92) and the fourth (94) metadata of the second selection of computer files (9), the qualification obtained comprising an information item from a detection of a defect or an absence of a defect of these manufactured components.

11. Method according to claim 10, wherein the system (1) is in accordance with claim 5;
the method further comprising the following steps:
(xii) determining a performance of the second version of the algorithm (8) by comparing the second (92) and fourth (94) metadata of the second selection of computer files (9) using the analysis module (10);
(xiii) reading a third selection of computer files (9) using the evaluation module (7), executing the second version of the algorithm (8) on the evaluation module (7), and providing the fourth detection metadata (94) to this third selection of computer files (9);
a metadata item from the fourth metadata (94) of each of the computer files of this third selection being associated by the performance determined in step (xii);
(xiv) reading the third selection of computer files (9) via the inspection module (42), and displaying the images (90) of a portion of computer files (9) of the third selection whose metadata item has a predetermined value, using the interface (41) of the inspection unit (4);
(xv) applying the marking to the images (90) of the portion of computer files (9) of the third selection and providing the third marking metadata (93) to this portion of computer files (9) of the third selection using the annotation module (5);
(xvi) providing the second inspection metadata (92) to the portion of computer files (9) of the third selection using the inspection module (42);
(xvii) qualifying manufactured components based on the second (92) and the fourth (94) metadata of the third selection of computer files (9), the qualification obtained comprising an information item from a detection of a defect or an absence of a defect of these manufactured components;
(xviii) training the second version of the algorithm (8) based on the portion of computer files (9) of the third selection, using the learning module (6);
(xix) developing a third version of the algorithm (8) based on the training carried out in step (xviii);
(xx) repeating the steps (viii) to (xix) with at least one version of the algorithm (8) on selections of computer files (9).
